# EUROPEAN PATENT APPLICATION

(11) **EP 4 129 546 A1**
(43) Date of publication of application: **08.02.2023**
(21) Application number: 21775050.4
(22) Date of filing: 13.01.2021
(51) Int. Cl.: B23C 5/10, B23C 5/20

(54) **CUTTING INSERT AND BLADE-TIP-REPLACEABLE CUTTING TOOL**

(30) Priority: 26.03.2020 JP 2020056758
(71) Applicant: MOLDINO Tool Engineering, Ltd., Tokyo 130-0026 (JP)
(72) Inventor: MURATA, Tomohiro, Narita-shi, Chiba 286-0825 (JP)
(74) Representative: Hoffmann Eitle
(86) International application number: PCT/JP2021/000765
(87) International publication number: WO 2021/192499

(57) **Abstract**

A convex arc-shaped corner edge (3) centered on a corner edge center line is formed at a corner portion of a polygonal surface (2) of a polygonal plate-shaped insert main body (1). A land portion (7) that gradually protrudes in an insert center line direction from the corner edge (3) toward an inner side of the polygonal surface (2) is formed on the polygonal surface (2), and a rake face portion (8) that gradually recedes in the insert center line direction toward the inner side of the polygonal surface (2) is formed closer to the inner side of the polygonal surface (2) than the land portion (7). Within 40° around the corner edge center line from a corner edge first end portion toward a corner edge second end portion along the corner edge (3), an inclination angle Θ1 of the land portion (7) with respect to a reference plane (P) perpendicular to an insert center line is an inclination angle Θ2 or more of the rake face portion (8) with respect to the reference plane (P), in a cross-section along the corner edge center line.

## Description

### TECHNICAL FIELD

The present invention relates a cutting insert in which a mounting hole that penetrates an insert main body around an insert center line is formed in front and back polygonal surfaces of the insert main body formed in a polygonal plate shape, and a corner edge having a convex arc shape, a main cutting edge that extends linearly in a tangential direction of the corner edge, and a sub-cutting edge that recedes with respect to an extension line of the main cutting edge are formed in a ridge portion of the polygonal surface in a plan view as viewed from an insert center line direction, and an indexable cutting tool detachably attached to an insert mounting seat formed at a tip end portion outer periphery of the tool main body in which such a cutting insert is rotating in a tool rotation direction around an axis.

Priority is claimed on Japanese Patent Application No. 2020-56758, filed March 26, 2020, the content of which is incorporated herein by reference.

### BACKGROUND ART

As such a cutting insert, for example, Patent Document 1 describes a cutting insert including a front surface portion having a long side and a short side and forming a substantially quadrangular shape in a plan view, a back surface portion disposed to face the front surface portion, a corner portion formed at each of four angular portions of the front surface portion and the back surface portion, two long-side-direction side surface portions and two short-side-direction side surface portions connecting the front surface portion and the back surface portion to each other, a fixing screw insertion hole penetrating from a central portion of the front surface portion to the back surface portion, and a cutting edge portion having cutting edges at intersecting ridgeline portions where the front surface portion and the back surface portion intersect the short-side-direction side surface portion and the long-side-direction side surface portion.

Here, the cutting edge portion includes first corner edges that are formed at a pair of first corner portions disposed at positions facing each other via a center line of the fixing screw insertion hole among the four corner portions of each of the front surface portion and the back surface portion, a main cutting edge that is connected to an end portion (S1) of the first corner edge on the short-side-direction side surface portion side and has a linear shape formed along the intersecting ridgeline portion of the short-side-direction side surface portion, a first sub-cutting edge that is connected the other end portion(S2) of the main cutting edge, is disposed so as to gently protrude in an outward direction of the short-side direction side surface portion in a plan view of the front surface portion and the back surface portion and gradually recede in a direction of the fixing screw insertion hole with respect to the extension line of the main cutting edge as separating from the other end portion (S2) of the main cutting edge, and has an arc shape with a radius R, and a second sub-cutting edge that is connected to the other end portion(S3) of the first sub-cutting edge and has a linear shape.

Additionally, the front surface portion and the back surface portion are provided with a reference flat surface portion formed so as to include the periphery of an opening portion of the fixing screw insertion hole. Moreover, in a cross-sectional view of a rake face of the second sub-cutting edge perpendicular to a cutting edge ridgeline of the second sub-cutting edge, a cross-sectional ridgeline portion of the rake face of the second sub-cutting edge has a convex shape that protrudes upward from the front surface portion or the back surface portion with respect to the cross-sectional ridgeline portion of the reference flat surface portion, and the front surface portion and the back surface portion includes a breaker surface portion that serves as a rake face of the cutting edge portion and is continuous with the reference flat surface portion. Also, in the cutting insert described in Patent Document 1, an angle formed between the breaker surface portion and the reference flat surface portion on the first corner edge side is smaller than an angle formed between the breaker surface portion and the reference flat surface portion on the second sub-cutting edge side.

### Citation List

### [Patent Document]

[Patent Document 1]
Japanese Patent No. 5967330

### SUMMARY OF INVENTION

### Technical Problem

In the cutting insert described in Patent Document 1, the corner edge, the main cutting edge, and the first sub-cutting edge are connected to the breaker surface portion through honing. However, for example, in a case where high-hardness work materials such as HRC50 to 65 are cut, there is a concern that the cutting edge strength of the corner edge, the main cutting edge, and the first sub-cutting edge is insufficient, resulting in chipping. In particular, such chipping is likely to occur at a boundary between the work material and the corner edge even when the cutting amount of the corner edge into the work material is small.

The present invention has been made under such a background, and an object thereof is to provide a cutting insert capable of preventing a corner edge from being chipped regardless of the cutting amount in a case where a high-hardness work material is cut, and an indexable cutting tool to which such a cutting insert is detachably attached.

### Solution to Problem

In order to solve the above problems to achieve such an object, a cutting insert of one aspect of the present invention (hereinafter, referred to as "cutting insert of the present invention") is a cutting insert in which a mounting hole that penetrates an insert main body around an insert center line is open to front and back polygonal surfaces of the insert main body formed in a polygonal plate shape, and in a ridge portion of the polygonal surface in a plan view as viewed from an insert center line direction, a corner edge having a convex arc shape centered on a corner edge center line parallel to the insert center line is formed at a corner portion of the polygonal surface, a main cutting edge that extends linearly in a tangential direction of the corner edge is formed from a corner edge first end portion of the corner edge, and a sub-cutting edge that recedes with respect to an extension line of the main cutting edge to a main cutting edge first end portion side is formed from the main cutting edge first end portion of the main cutting edge opposite to the corner edge first end portion. A land portion that gradually protrudes in the insert center line direction from the corner edge toward an inner side of the polygonal surface is formed on the polygonal surface, and a rake face portion that gradually recedes in the insert center line direction toward the inner side of the polygonal surface is formed closer to the inner side of the polygonal surface than the land portion, and within 40° around the corner edge center line from the corner edge first end portion toward a corner edge second end portion opposite to the corner edge first end portion along the corner edge, an inclination angle θ1 of the land portion with respect to a reference plane perpendicular to the insert center line is an inclination angle θ2 or more of the rake face portion with respect to the reference plane perpendicular to the insert center line, in a cross-section along the corner edge center line.

Additionally, an indexable cutting tool according to another aspect of the present invention (hereinafter, referred to as "an indexable cutting tool of the present invention") is an indexable cutting tool in which the cutting insert is detachably attached to an insert mounting seat formed at a tip end portion outer periphery of a tool main body rotating in a tool rotation direction around an axis by screwing a clamp screw inserted through the mounting hole into a bottom surface of the insert mounting seat facing the tool rotation direction such that one polygonal surface of the cutting insert main body is directed in the tool rotation direction, the corner edge formed in the corner portion of the one polygonal surface is directed toward a tip outer peripheral side of the tool main body, and the main cutting edge extending from the corner edge first end portion of the corner edge is directed toward an inner peripheral side of the tool main body.

Additionally, a tool main body of further another aspect of the present invention (hereinafter, referred to as "a tool main body of the present invention") is a tool main body for an indexable cutting tool in which the cutting insert of the present invention is configured to be detachably attachable to an insert mounting seat formed at a tip end portion outer periphery of a tool main body rotating in a tool rotation direction around an axis by screwing a clamp screw inserted through the mounting hole into a bottom surface of the insert mounting seat facing the tool rotation direction such that one polygonal surface of the cutting insert main body is directed in the tool rotation direction, the corner edge formed in the corner portion of the one polygonal surface is directed toward a tip outer peripheral side of the tool main body, and the main cutting edge extending from the corner edge first end portion of the corner edge is directed toward an inner peripheral side of the tool main body.

In the cutting insert having the above configuration, the land portion that gradually protrudes in the insert center line direction from the corner edge toward an inner side of the polygonal surface and the rake face portion that gradually recedes in the insert center line direction further toward the inner side of the polygonal surface than the land portion are formed on the polygonal surface, and within 40° around the corner edge center line toward the corner edge second end portion from the corner edge first end portion along the corner edge, the inclination angle θ1 of the land portion with respect to the reference plane perpendicular to the insert center line is the inclination angle Θ2 or more of the rake face portion with respect to the reference plane perpendicular to the insert center line, in the cross-section along the corner edge center line. Thus, it is possible to secure a large cross-sectional area of the cross-section along the corner edge center line of the insert main body on the polygonal surface connected to the corner edge within this range.

That is, within the above range in which the corner edge is used exclusively for cutting operations, the wall thickness of the insert main body on the polygonal surface connected to the corner edge can be increased to give high cutting edge strength, and even when a high-hardness work material is cut, the fracture resistance of the corner edge can be improved. Therefore, according to the cutting insert and the indexable cutting tool configured in this way, it is possible to perform a stable cutting operation even on such a high-hardness work material for a long period of time.

Here, desirably, in a case where a convexly curved apex portion coming in contact with the land portion and the rake face portion is formed between the land portion and the rake face portion, in the cross-section along the corner edge center line, a rear wall surface portion that gradually recedes in the insert center line direction toward the inner side of the polygonal surface with respect to an extension line of the rake face portion to the inner side of the polygonal surface, and a boss surface that is a plane perpendicular to the insert center line and extending from the rear wall surface portion to the inner side of the polygonal surface to form an opening portion of the mounting hole are formed closer to the inner side of the polygonal surface than the rake face portion, in the cross-section along the corner edge center line, and within 40° around the corner edge center line from the corner edge first end portion toward the corner edge second end portion along the corner edge, a distance H1 in a direction perpendicular to the corner edge center line from the corner edge to an apex of the apex portion in the insert center line direction is a distance H2 or less in the direction perpendicular to the corner edge center line from the apex of the apex portion to an intersection point between the boss surface and the extension line of the rake face portion to the inner side of the polygonal surface, in the cross-section along the corner edge center line.

By configuring the present invention in this way, the distance H2 is the distance H1 or more. Thus, a larger cross-sectional area of the cross-section along the corner edge center line of the insert main body on the polygonal surface connected to the corner edge can be further secured, and it is possible to give high cutting edge strength to the corner edge to further improve the fracture resistance.

In addition, in this case, desirably, within 40° around the corner edge center line from the corner edge first end portion toward the corner edge second end portion along the corner edge, a ratio H3/H2 of a distance H3 in a direction perpendicular to the corner edge center line from the apex of the apex portion to a contact point or an intersection point between the rear wall surface portion and the boss surface and a distance H2 in the direction perpendicular to the corner edge center line from the apex of the apex portion to the intersection point between the boss surface and the extension line of the rake face portion to the inner side of the polygonal surface is within a range of 0.45 to 0.75, in the cross-section along the corner edge center line.

By configuring the present invention in this way, the dischargeability of chips generated during cutting operations can be improved. In a case where the insert main body has a front-back inverted symmetrical shape as described below, it is possible to secure the area of the boss surface, which is a seating surface to be brought into close contact with the bottom surface of the insert mounting seat of the tool main body facing the tool rotation direction so as to stably seat the cutting insert on the insert mounting seat.

That is, when the ratio H3/H2 is smaller than 0.45, the contact distance between a chip and the rake face portion becomes short. Therefore, there is a concern that the control of the discharge direction of the chip becomes unstable. Additionally, when the ratio H3/H2 is larger than 0.75, on the contrary, the contact distance between the chip and the rake face portion becomes long and the cutting resistance resulting from the abrasion of the chip increases, and the rear wall surface portion recedes to the inner side of the polygonal surface. Thus, there is a concern that the area of the boss surface, which is the seating surface to be brought into close contact with the bottom surface of the insert mounting seat becomes small as described above, and the seating stability of the cutting insert is impaired.

Additionally, similarly to the above, desirably, in a case where a rear wall surface portion that gradually recedes in the insert center line direction toward the inner side of the polygonal surface with respect to an extension line of the rake face portion to the inner side of the polygonal surface, and a boss surface that is a plane perpendicular to the insert center line and extending from the rear wall surface portion to the inner side of the polygonal surface to form an opening portion of the mounting hole are formed closer to the inner side of the polygonal surface than the rake face portion, in the cross-section along the corner edge center line, when a tangential line or an intersection line between the rear wall surface portion and the boss surface is formed in an arc shape in the plan view within 40° around the corner edge center line from the corner edge second end portion toward the corner edge first end portion along the corner edge, in the plan view, a ratio G2/G1 formed by a radius G2 of an arc formed by the tangential line or the intersection line between the rear wall surface portion and the boss surface with respect to a radius G1 of an arc formed by the corner edge is within a range of 0.23 to 0.87.

That is, when the ratio G2/G1 is smaller than 0.23, there is a concern that the width from the corner edge to the tangential line or the intersection line between the rear wall surface portion and the boss surface as viewed from the corner edge center line direction become large, the contact distance between the chip and the land portion or the rake face portion increases and the cutting resistance increases, there is a concern that the rear wall surface portion recedes to the inner side of the polygonal surface and the area of the boss surface becomes small, and the seating stability of the cutting insert is impaired. Additionally, when the ratio G2/G1 is larger than 0.87, the width from the corner edge to the tangential line or the intersection line between the rear wall surface portion and the boss surface as viewed from the corner edge center line direction may become small, and the contact distance between the chip and the rake face portion of the land portion may become short. Therefore, there is a concern that the control of the chip discharge direction becomes unstable.

Moreover, the region, which extends along the direction parallel to the reference plane perpendicular to the insert center line, is formed in the corner edge. Accordingly, in this region, the wall thickness of the insert main body from the corner edge can be increased even in the insert center line direction to give high cutting edge strength. Thus, for example, even in a case where a machined surface of a work material having a large number of holes is cut, the fracture resistance of the corner edge can be improved.

Furthermore, the polygonal surface is the rectangular surface formed in a 180° rotationally symmetrical manner around the insert center line, the corner edges are formed at the corner portions where two angular portions located on one diagonal line of the rectangular surface are disposed, and the main cutting edge and the sub-cutting edge are formed at the short side portions of the rectangular surface connected to the corner edges. Thus, two corner edges, two main cutting edges, and two sub-cutting edges can be used on one polygonal surface, which is efficient and economical. In particular, in this case, by forming the insert main body in a front-back inverted symmetrical shape, four sets of corner edges, main cutting edges, and sub-cutting edges can be used in one insert main body, which is even more efficient and economical.

### Advantageous Effects of Invention

As described above, according to the present invention, since high cutting edge strength can be given to the corner edge, the fracture resistance of the corner edge can be improved. Even in a case where a high-hardness work material is cut, a stable cutting operation can be performed for a long period of time.

### BRIEF DESCRIPTION OF DRAWINGS

Fig. 1 is a perspective view showing a first embodiment of a cutting insert of the present invention.
Fig. 2 is a plan view of the embodiment shown in Fig. 1 as viewed from an insert center line direction.
Fig. 3 is a side view as viewed in a direction of arrow V in Fig. 2.
Fig. 4 is a side view as viewed in a direction of arrow W in Fig. 2.
Fig. 5 is an enlarged cross-sectional view taken along CX in Fig. 2.
Fig. 6 is an enlarged cross-sectional view taken along CY in Fig. 2.
Fig. 7 is an enlarged cross-sectional view taken along CZ in Fig. 2.
Fig. 8 is a perspective view of a tool main body of an indexable cutting tool to which the embodiment shown in Fig. 1 is attached.
Fig. 9 is a side view of the tool main body shown in Fig. 8.
Fig. 10 is a perspective view showing an embodiment of the indexable cutting tool of the present invention in which the cutting insert of the embodiment shown in Fig. 1 is attached to the tool main body shown in Fig. 8.
Fig. 11 is a side view of the embodiment shown in Fig. 10.
Fig. 12 is a perspective view showing a second embodiment of the cutting insert of the present invention.
Fig. 13 is a plan view of the embodiment shown in Fig. 12 as viewed from an insert center line direction.
Fig. 14 is a side view as viewed in a direction of arrow V in Fig. 13.
Fig. 15 is a side view as viewed in a direction of arrow W in Fig. 13.
Fig. 16 is an enlarged cross-sectional view taken along CX in Fig. 13.
Fig. 17 is an enlarged cross-sectional view taken along CY in Fig. 13.
Fig. 18 is an enlarged cross-sectional view taken along CZ in Fig. 13.
Fig. 19 is a perspective view showing a third embodiment of the cutting insert of the present invention.
Fig. 20 is a plan view of the embodiment shown in Fig. 19 as viewed from an insert center line direction.
Fig. 21 is a side view as viewed in a direction of arrow V in Fig. 20.
Fig. 22 is a side view as viewed in a direction of arrow W in Fig. 20.
Fig. 23 is an enlarged cross-sectional view taken along CX in Fig. 20.
Fig. 24 is an enlarged cross-sectional view taken along CY in Fig. 20.
Fig. 25 is an enlarged cross-sectional view taken along CZ in Fig. 20.
Fig. 26 is a perspective view showing a fourth embodiment of the cutting insert of the present invention.
Fig. 27 is a plan view of the embodiment shown in Fig. 26 as viewed from an insert center line direction.
Fig. 28 is a side view as viewed in a direction of arrow V in Fig. 27.
Fig. 29 is a side view as viewed in a direction of arrow W in Fig. 27.
Fig. 30 is an enlarged cross-sectional view taken along CX in Fig. 27.
Fig. 31 is an enlarged cross-sectional view taken along CY in Fig. 27.
Fig. 32 is an enlarged cross-sectional view taken along CZ in Fig. 27.

### DESCRIPTION OF EMBODIMENTS

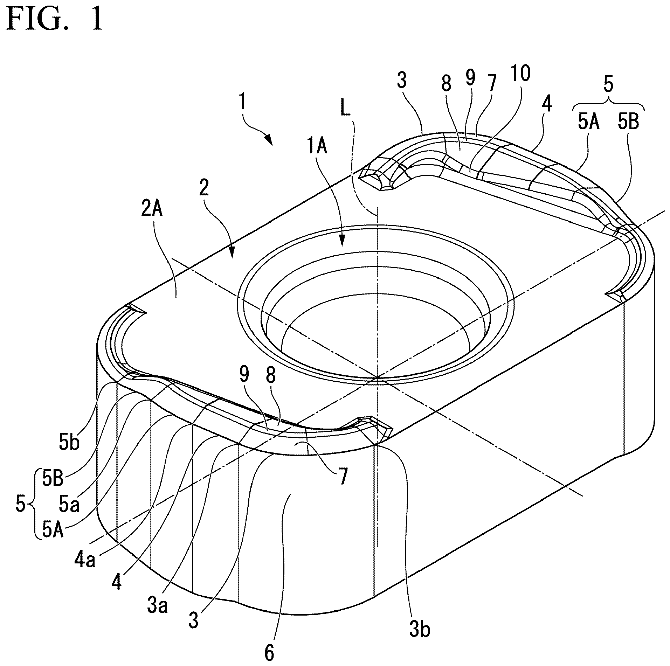

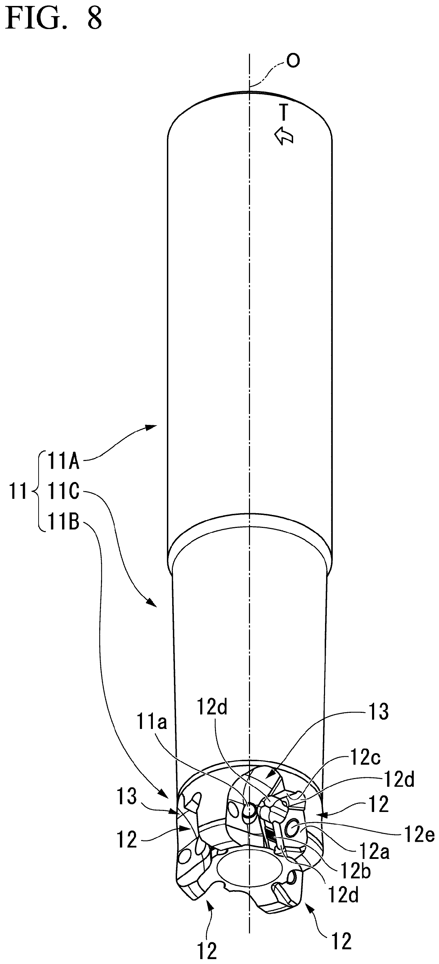

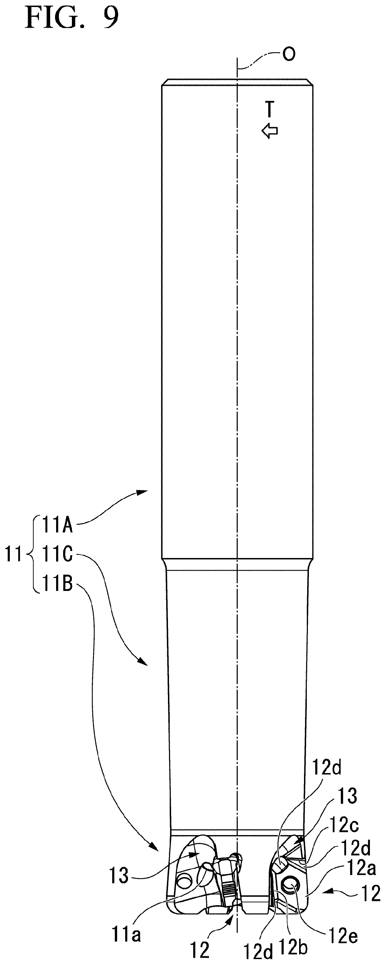

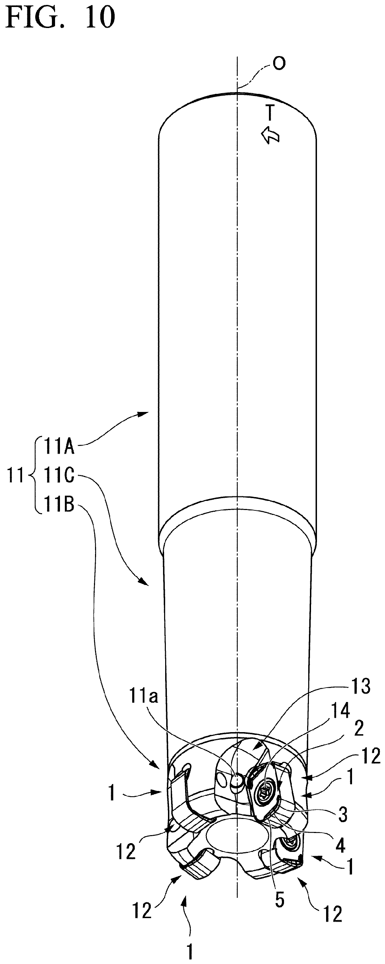

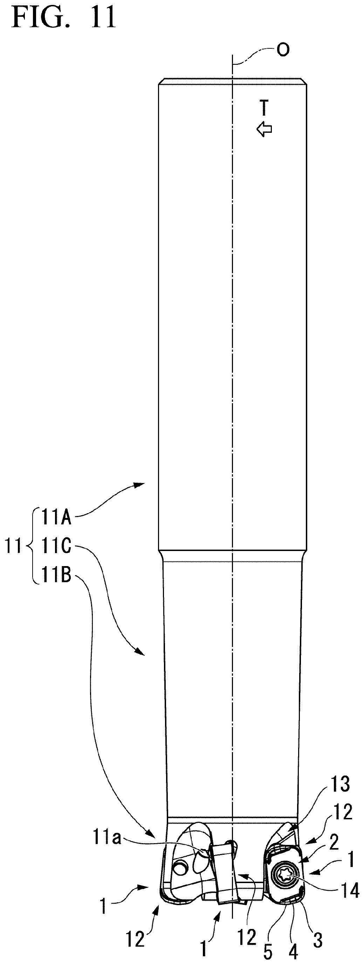

Figs. 1 to 7 show a first embodiment of a cutting insert of the present invention. Additionally, Figs. 8 and 9 show a tool main body of an indexable cutting tool to which the cutting insert of the first embodiment is detachably attached, and Figs. 10 and 11 show an embodiment of the indexable cutting tool of the present invention in which the cutting insert of the first embodiment shown in Figs. 1 to 7 is attached to the tool main body.

The cutting insert of the present embodiment includes an insert main body 1 formed in a polygonal plate shape with a hard material such as cemented carbide, and a polygonal surface 2 of the insert main body 1 is formed in a substantially rectangular surface shape centered on an insert center line L in the present embodiment. The insert center line L is a line that passes through the center of the polygonal surface 2 and is parallel to a thickness direction of the insert main body. In the insert main body 1, a mounting hole 1A having a circular section centered on the insert center line L is formed so as to penetrate the insert main body 1 and is open to a central portion of the front and back polygonal surfaces 2.

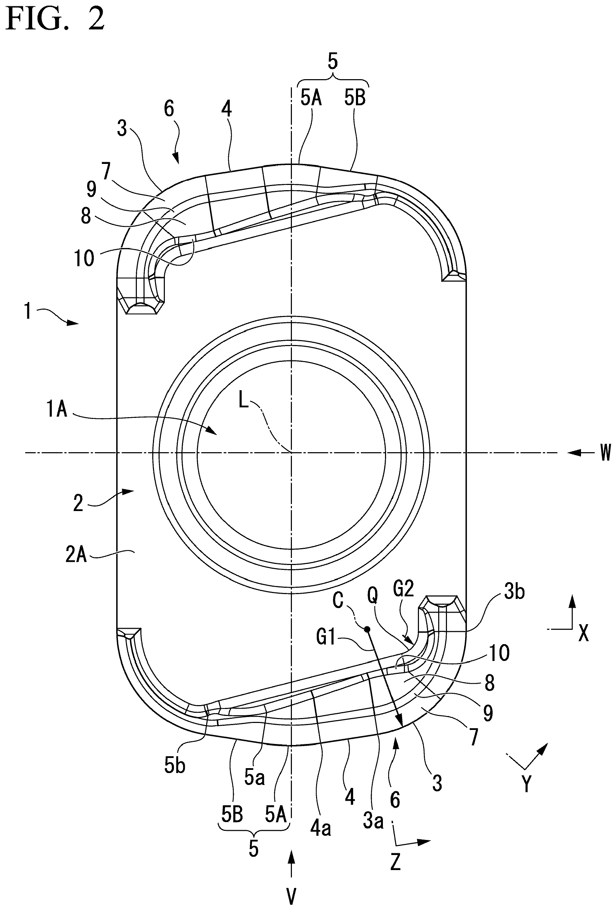

In a ridge portion of the polygonal surface 2 of the insert main body 1, as viewed from the direction of the insert center line L in a plan view and as shown in Fig. 2, a corner edge 3 having a convex arc shape centered on a corner edge center line C parallel to the insert center line L is formed at a corner portion of the polygonal surface 2. Additionally, a main cutting edge 4 that extends linearly in a tangential direction of the corner edge 3 is formed from a corner edge first end portion 3a (an end portion of the corner edge 3 on a short side in a rectangular shape formed by the polygonal surface 2) of the corner edge 3.

Moreover, a sub-cutting edge 5 is formed so as to recede to an inner side of the polygonal surface 2 with respect to an extension line that extends to a main cutting edge first end portion 4a side of the main cutting edge 4 from the main cutting edge first end portion 4a of the main cutting edge 4 opposite to the corner edge first end portion 3a. In the present embodiment, the sub-cutting edge 5 has a convex arc shape having a larger radius than the corner edge 3 in a plan view and includes a first sub-cutting edge 5A that comes in contact with the main cutting edge 4 at the main cutting edge first end portion 4a, and a second sub-cutting edge 5B that extends linearly in contact with a first sub-cutting edge 5A at a sub-cutting edge first end portion 5a of the first sub-cutting edge 5A opposite to the main cutting edge first end portion 4a.

In the present embodiment, the rectangular surface formed by the front and back polygonal surfaces 2 is formed in a 180° rotationally symmetrical manner around the insert center line L, and the corner edges 3 are formed at corner portions (lower right and upper left corner portions in Fig. 2) where two angular portions located on one diagonal line of this rectangular surface are disposed. Additionally, the main cutting edge 4 and the sub-cutting edge 5 are formed on a short side portion of the rectangular surface connected to the corner edge 3. Moreover, the insert main body 1 of the present embodiment is formed in a front-back inverted symmetrical shape. Therefore, four sets of corner edges 3, main cutting edges 4, and sub-cutting edges 5 are formed in one insert main body 1.

Here, a flank face 6 connected to the corner edge 3, the main cutting edge 4, and the sub-cutting edge 5 is formed on a side surface of the insert main body 1 that extends between the front and back polygonal surfaces 2. The side surface of the insert main body 1 including the flank face 6 extends parallel to the insert center line L, and the cutting insert of the present embodiment is a negative type cutting insert. The portion of the flank face 6 connected to the first sub-cutting edge 5A of the sub-cutting edge 5 is a common flank face 6 between the first sub-cutting edges 5A formed on the same short side surfaces of the front and back polygonal surfaces 2.

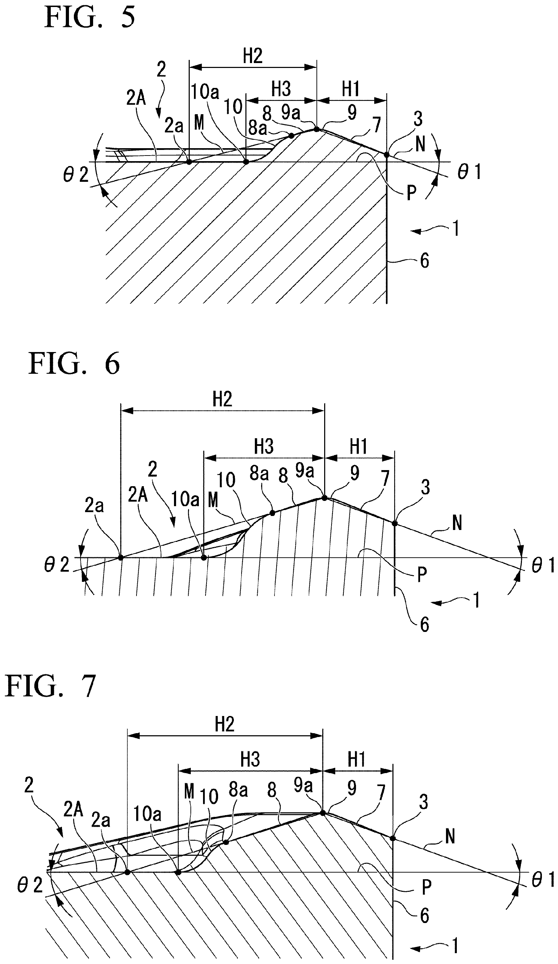

On the polygonal surface 2, a land portion 7, which gradually protrudes toward the outer side of the insert main body 1 in the direction of the insert center line L toward the inner side of the polygonal surface 2, as shown in Figs. 5 to 7, over the entire length of the corner edge 3, the main cutting edge 4, and the sub-cutting edge 5, is formed along the corner edge 3, the main cutting edge 4, and the sub-cutting edge 5, and a rake face portion 8, which gradually recedes toward the inner side of the insert main body 1 in the direction of the insert center line L toward the inner side of the polygonal surface 2, is formed closer to the inner side of the polygonal surface 2 than the land portion 7. Additionally, a convexly curved apex portion 9, which comes in contact with the land portion 7 and the rake face portion 8 in a cross-section along the corner edge center line C and a section orthogonal to the main cutting edge 4 and the sub-cutting edge 5, is formed between the land portion 7 and the rake face portion 8.

Moreover, a rear wall surface portion 10, which gradually recedes in the direction of the insert center line L toward the inner side of the polygonal surface 2 with respect to an extension line M of the rake face portion 8 that extends to the inner side of the polygonal surface 2, as shown in Figs. 5 to 7, and in the cross-section along the corner edge center line C, is formed closer to the inner side of the polygonal surface 2 than the rake face portion 8. Additionally, a boss surface 2A, which extends toward the inner side of the polygonal surface 2 to form an opening portion of the mounting hole 1A and is a plane perpendicular to the insert center line L, is formed closer to the inner side of the polygonal surface 2 than the rear wall surface portion 10.

Here, the land portion 7 may be formed linearly in the cross-section along the corner edge center line C and the cross-section orthogonal to the main cutting edge 4 and the sub-cutting edge 5. However, in the present embodiment, as shown in Figs. 5 to 7, the land portion 7 is formed in a convexly curved shape that is slightly convexly curved in the direction of the corner edge center line C. Additionally, the rake face portion 8 may also be formed linearly in the cross-section along the corner edge center line C and the cross-section orthogonal to the main cutting edge 4 and the sub-cutting edge 5. However, in the present embodiment, similarly, as shown in Figs. 5 to 7, the rake face portion 8 is formed in a convexly curved shape that is slightly convexly curved in the direction of the corner edge center line C.

Furthermore, the rear wall surface portion 10 is formed so as to form a convex curve toward the inner side of the polygonal surface 2 with respect to the extension line M of the rake face portion 8 that is linear as described below in the present embodiment, as shown in Figs. 5 to 7, in the cross-section along the corner edge center line C to recede in the direction of the insert center line L and then form a concave curve coming in contact with the convex curve to recede in the direction of the insert center line L and come in contact with the boss surface 2A.

Also, within 40° around the corner edge center line C from the corner edge first end portion 3a of the corner edge 3 toward a corner edge second end portion 3b opposite to the corner edge first end portion 3a along the corner edge 3, an inclination angle θ1 of the land portion 7 with respect to a reference plane P perpendicular to the insert center line L is an inclination angle Θ2 or more of the rake face portion 8 with respect to the reference plane P perpendicular to the insert center line L, as shown in Figs. 5 to 7, in the cross-section along the corner edge center line C. In addition, in Figs. 5 to 7, the position of the reference plane P perpendicular to the insert center line L is aligned with the position of the boss surface 2A.

In the cross-section along the corner edge center line C, the inclination angle θ1 of the land portion 7 connected to the corner edge 3 shown in Figs. 5 to 7 is desirably within a range of 15° to 25°, and in the present embodiment, the inclination angle Θ1 is constant at 20° over the entire length of the corner edge 3.

In contrast, in the cross-section along the corner edge center line C, the inclination angle Θ2 of the rake face portion 8 at the corner edge first end portion 3a shown in Fig. 7 is 17.1°, the inclination angle Θ2 of the rake face portion 8 at the position of 40° around the corner edge center line C from the corner edge first end portion 3a shown in Fig. 6 toward the corner edge second end portion 3b and also at the position of 40° around the corner edge center line C from the corner edge second end portion 3b toward the corner edge first end portion 3a is 16.4°, and the inclination angle Θ2 of the rake face portion 8 at the corner edge second end portion 3b of the corner edge 3 shown in Fig. 5 is 14.4°. That is, in the present embodiment, even within 40° around the corner edge center line C from the corner edge second end portion 3b opposite to the corner edge first end portion 3a toward the corner edge first end portion 3a along the corner edge 3, in the cross-section along the corner edge center line C, the inclination angle Θ1 of the land portion 7 with respect to the reference plane P perpendicular to the insert center line L is the inclination angle Θ2 or more of the rake face portion 8 with respect to the reference plane P perpendicular to the insert center line L, the inclination angle θ1 of the land portion 7 is the inclination angle Θ2 or more of the rake face portion 8 over the entire length of the corner edge 3, and particularly, the inclination angle θ1 is larger than the inclination angle Θ2. In addition, it is desirable that the inclination angle Θ2 of the rake face portion 8 connected to the corner edge 3 via the land portion 7 and the apex portion 9 is within a range of 5° to 20°.

Here, in the present embodiment, the section of the land portion 7 along the corner edge center line C has a convexly curved shape that is slightly convexly curved as described above. Thus, as shown in Figs. 5 to 7, in the cross-section along the corner edge center line C, the inclination angle Θ1 of the land portion 7 is an inclination angle of a straight line N connecting the corner edge 3 and an apex 9a of the apex portion 9 most protruding in the direction of the insert center line L with respect to the reference plane P. However, in a case where the land portion 7 is formed linearly as described above in the cross-section along the corner edge center line C, the inclination angle θ1 of the land portion 7 may be the inclination angle of the straight line with respect to the reference plane P.

Additionally, in the present embodiment, the rake face portion 8 also has a convexly curved shape in which the cross-section along the corner edge center line C is slightly convexly curved as described above. Thus, as shown in Figs. 5 to 7, in the cross-section along the corner edge center line C, the inclination angle Θ2 of the rake face portion 8 is the inclination angle of a straight line, which connects the apex 9a of the apex portion 9 to a contact point 8a of the rake face portion 8 with the rear wall surface portion 10 which starts to recede in the direction of the insert center line L from the rake face portion 8, with respect to the reference plane P, that is, an intersection angle between the extension line M of the straight line to the inner side of the polygonal surface 2 and the reference plane P (boss surface 2A).

However, in a case where the rake face portion 8 also has a linear shape as described above in the cross-section along the corner edge center line C, the inclination angle Θ2 of the rake face portion 8 may be the inclination angle of this straight line with respect to the reference plane P, that is, an intersection angle between the extension line M of the straight line formed by the rake face portion 8 in the cross-section along the corner edge center line C to the inner side of the polygonal surface 2 and the reference plane P.

In the present embodiment, within 40° around the corner edge center line C from the corner edge first end portion 3a toward the corner edge second end portion 3b along the corner edge 3, as shown in Figs. 5 to 7, a distance H1 in the direction perpendicular to the corner edge center line C from the corner edge 3 to the apex 9a in the direction of the insert center line L of the apex portion 9 is a distance H2 or less in the direction perpendicular to the corner edge center line C from the apex 9a of the apex portion 9 to an intersection point 2a between the boss surface 2A and the extension line M of the rake face portion 8 to the inner side of the polygonal surface 2, in the cross-section along the corner edge center line C.

However, in a case where the rake face portion 8 is also formed in a convexly curved shape that is slightly convexly curved in the direction of the corner edge center line C in the cross-section along the corner edge center line C, the extension line of the rake face portion 8 to the inner side of the polygonal surface 2 also has a convexly curved shape that is slightly convexly curved in the direction of the corner edge center line C.

Thus, in such a case, as shown in Figs. 5 to 7, the distance H2 may be a distance in the direction perpendicular to the corner edge center line C from the apex 9a of the apex portion 9 to the intersection point between the boss surface 2A and the extension line M, to the inner side of the polygonal surface 2, of the straight line, which connects the apex 9a of the apex portion 9 to the contact point 8a of the rake face portion 8 with the rear wall surface portion 10 which starts to recede in the direction of the insert center line L from the rake face portion 8.

Furthermore, in the present embodiment, within 40° around the corner edge center line C from the corner edge first end portion 3a toward the corner edge second end portion 3b along the corner edge 3, as shown in Figs. 5 to 7, a ratio H3/H2 of a distance H3 in the direction perpendicular to the corner edge center line C from the apex 9a of the apex portion 9 to the contact point or intersection point (contact point 10a in the present embodiment) between the rear wall surface portion 10 and the boss surface 2A and the distance H2 in the direction perpendicular to the corner edge center line C to the intersection point 2a between the boss surface 2A and the extension line M of the rake face portion 8 from the apex 9a of the apex portion 9 to the inner side of the polygonal surface 2 is in a range of 0.45 to 0.75, in the cross-section along the corner edge center line C.

In addition, particularly, it is desirable that the distance H1 at the corner edge first end portion 3a is within a range of 0.35 mm to 0.45 mm, and in the present embodiment, the distance H1 is constant with 0.4 mm over the entire length of the corner edge 3. In contrast, the distance H2 at the corner edge first end portion 3a shown in Fig. 7 is 1.1 mm, the distance H3 is 0.8 mm, the distance H2 at the position of 40° around the corner edge center line C from the corner edge first end portion 3a toward the corner edge second end portion 3b shown in Fig. 6 is 1.2 mm, and the distance H3 is 0.7 mm, the distance H2 at the corner edge second end portion 3b of the corner edge 3 shown in Fig. 5 is 0.7 mm, and the distance H3 is 0.4 mm.

That is, in the present embodiment, the distance H1 is the distance H2 or less even within 40° around the corner edge center line C from the corner edge second end portion 3b toward the corner edge first end portion 3a along the corner edge 3, and the distance H1 is the distance H2 or less over the entire length of the corner edge 3. Additionally, the ratio H3/H2 is within a range of 0.45 to 0.75 within 40° around the corner edge center line C from the corner edge first end portion 3a toward the corner edge second end portion 3b along the corner edge 3, and the ratio H3/H2 is in a range of 0.45 to 0.75 even within 40° around the corner edge center line C from the corner edge second end portion 3b toward the corner edge first end portion 3a along the corner edge 3.

In the present embodiment, within 40° around the corner edge center line C from the corner edge second end portion 3b toward the corner edge first end portion 3a along the corner edge 3, a tangential line or intersection line (tangential line Q in the present embodiment) between the rear wall surface portion 10 and the boss surface 2A is formed in an arc shape as shown in Fig. 2 in the plan view. Also, in this plan view, a ratio G2/G1 formed by a radius G2 of an arc of the tangential line Q between the rear wall surface portion 10 and the boss surface 2A with respect to a radius G1 of an arc formed by the corner edge 3 is in a range of 0.23 to 0.87 in the present embodiment.

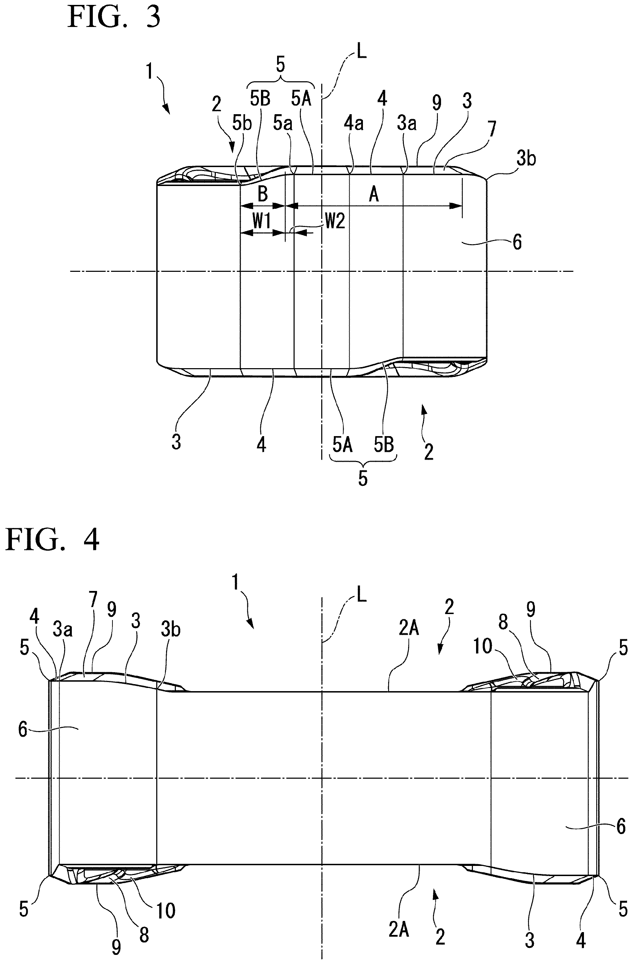

In the present embodiment, the corner edge 3 is formed with a parallel region A that extends in a direction parallel to the reference plane P perpendicular to the insert center line L. Here, as shown in Fig. 4, the corner edge 3 in the present embodiment is located at a position close to the boss surface 2A in the direction of the insert center line L in the corner edge second end portion 3b.

Also, the corner edge 3 extends from the corner edge second end portion 3b toward the corner edge first end portion 3a while gradually protruding in the direction of the insert center line L, as shown in Fig. 4, from the corner edge second end portion 3b toward the corner edge first end portion 3a, and reaches the parallel region A that extends in a direction parallel to the reference plane P perpendicular to the insert center line L at a position in front of the position of 40° from the corner edge second end portion 3b around the corner edge center line C. Additionally, the corner edge 3 extends in the direction parallel to the reference plane P, reaches the corner edge first end portion 3a, and is connected to the main cutting edge 4 after reaching the parallel region A.

Moreover, in the present embodiment, as shown in Fig. 3, the main cutting edge 4 to which the corner edge 3 is connected in this way and the first sub-cutting edge 5A, on the main cutting edge 4 side, out of the sub-cutting edges 5 connected to the main cutting edge 4 are also located on the parallel region A that extends in the direction parallel to the reference plane P perpendicular to the insert center line L through the corner edge first end portion 3a. Meanwhile, the second sub-cutting edge 5B connected to the first sub-cutting edge 5A includes an inclined region B that gradually recedes in the direction of the insert center line L toward the sub-cutting edge second end portion 5b opposite to the sub-cutting edge first end portion 5a in the present embodiment.

Here, in the present embodiment, as shown in Fig. 3, the portion of the second sub-cutting edge 5B on the sub-cutting edge first end portion 5a side is the parallel region A that extends in the direction parallel to the reference plane P perpendicular to the insert center line L. Also, a portion closer to the sub-cutting edge second end portion 5b side than the parallel region A is the inclined region B that gradually recedes in the direction of the insert center line L at a constant inclination angle after receding in the direction of the insert center line L while drawing a convex curve that becomes convex in the direction of the insert center line L toward the sub-cutting edge second end portion 5b side.

Additionally, as shown in Fig. 3 as viewed from the direction facing the flank face 6 of the sub-cutting edge 5, in the present embodiment, a width W1, in the direction perpendicular to the insert center line L, of the inclined region B in the second sub-cutting edge 5B is made larger than a width W2, in the direction perpendicular to the insert center line L, of the parallel region A in the second sub-cutting edge 5B.

Moreover, although not shown, it is desirable that the inclination angle Θ1 of the land portion 7 in the cross-section orthogonal to the sub-cutting edge 5 at the sub-cutting edge first end portion 5a is within a range of 15° to 35°, and the inclination angle θ1 is 20° in the present embodiment. Additionally, it is desirable that the distance of the land portion 7 in the direction perpendicular to the insert center line L in the cross-section orthogonal to the sub-cutting edge 5 similarly at the sub-cutting edge first end portion 5a is within a range of 0.15 mm to 0.45 mm, and the distance is 0.4 mm in the present embodiment.

Here, the insert main body 1 of the cutting insert formed of such a hard material as cemented carbide is manufactured according to the basic process of the powder metallurgy technique. That is, in a case where the insert main body 1 is made of cemented carbide, powder press forming using a die is performed by using a granular granulated powder containing tungsten carbide powder and cobalt powder as principal components and chromium, tantalum, or the like as accessory components as necessary.

A press-formed body obtained in this way can be sintered for a predetermined time in a sintering furnace controlled to have appropriate atmosphere and temperature to manufacture a sintered body to be the insert main body 1. The basic shape of the insert main body 1 is reflected by the design of the die, and the detailed shape of the insert main body 1 is obtained by die forming. Moreover, in order to achieve the high accuracy of the edge tip shape of the insert main body 1, grinding using a grindstone may be performed as necessary.

The cutting insert having such a configuration is detachably attached to an insert mounting seat 12 formed at a tip end portion outer periphery of the tool main body 11 of the indexable cutting tool shown in Figs. 8 and 9 to constitute an embodiment of the indexable cutting tool of the present invention shown in Figs. 10 and 11. The cutting insert attached to the insert mounting seat 12 in this way is fed in a direction intersecting the axis O while the tool main body 11 is rotated around the axis O in a tool rotation direction T, thereby cutting a work material with the corner edge 4, the main cutting edge 3, and the sub-cutting edge 5.

The tool main body 11 is integrally formed of a metal material such as a steel material in a substantially columnar shaft shape centered on the axis O, a posterior end portion (upper portion in Figs. 8 to 11) thereof is a shank portion 11A that remains columnar, a tip end portion (lower portion in Figs. 8 to 11) thereof is a cutting edge portion 11B having a diameter smaller than that of the shank portion 11A, and the insert mounting seat 12 is formed on the cutting edge portion 11B. Additionally, a tapered neck portion 11C that is reduced in diameter toward a tip side of the tool main body 11 is formed between the shank portion 11A and the cutting edge portion 11B.

A plurality of recessed groove-shaped chip pockets 13 are formed at intervals in the circumferential direction (in the present embodiment, four at equal intervals in the circumferential direction) at the outer periphery of the cutting edge portion 11B of the tool main body 11, and each insert mounting seat 12 are formed as a recess recessed to the side opposite to the tool rotation direction T at a tip end portion of a wall surface of each chip pocket 13 facing the tool rotation direction T. In addition, a coolant hole 11a formed in the tool main body 11 is open to the wall surface of the chip pocket 13 facing the side opposite to the tool rotation direction T.

The insert mounting seat 12 includes a bottom surface 12a that faces the tool rotation direction T, a wall surface 12b that extends in the tool rotation direction T from an inner peripheral side of the bottom surface 12a in the tool main body 11 and faces an outer peripheral side, and a wall surface 12c that extends in the tool rotation direction T from a posterior end side of the bottom surface 12a in the tool main body 11 and faces the tip side. Additionally, recessed groove-shaped relief portions 12d are formed at a corner angular portion where the bottom surface 12a and the wall surfaces 12b and 12c intersect each other and a corner angular portion where the wall surfaces 12b and 12c intersect each other.

The bottom surface 12a is formed in a similar planar shape that is one size smaller than the boss surface 2A of the polygonal surface 2 in the insert main body 1 of the cutting insert and is slightly inclined so as to face the tool rotation direction T side toward the posterior end side of the tool main body 11. Additionally, a screw hole 12e is formed perpendicularly to the bottom surface 12a at a central portion of the bottom surface 12a.

The cutting insert of the embodiment is seated on such an insert mounting seat 12 such that one polygonal surface 2 of the insert main body 1 is directed in the tool rotation direction T and the boss surface 2A of the other polygonal surface 2 is brought into close contact with the bottom surface 12a and such that the corner edge 3 formed at one corner portion of the one polygonal surface 2 is directed to a tip outer peripheral side of the tool main body 11 and the main cutting edge 4 that extends from the corner edge first end portion 3a of the corner edge 3 is directed to the inner peripheral side of the tool main body 11. In this case, two side surfaces of the insert main body 1 intersecting the other corner portion located on a diagonal line of the one polygonal surface 2 with respect to the one corner portion are made to abut against with the wall surfaces 12b and 12c.

Also, the cutting insert seated in this way is detachably attached to the insert mounting seat 12 by a clamp screw 14 inserted into the mounting hole 1A from the tool rotation direction T side being screwed into the screw hole 12e of the bottom surface 12a and thereby the boss surface 2A of the other polygonal surface 2 is pressed against the bottom surface 12a and the two side surfaces intersecting the other corner portion of the one polygonal surface 2 are pressed against the wall surfaces 12b and 12c.

In the cutting insert attached to the insert mounting seat 12 in this way, the bottom surface 12a is inclined as described above. Thus, the insert center line L is slightly inclined to the posterior end side of the tool main body 11 toward the side opposite to the tool rotation direction T. Accordingly, a flank angle is given to the corner edge 3 directed to the tip outer peripheral side of the tool main body 11, and the flank faces 6 of the main cutting edge 4 and the sub-cutting edge 5 that extend from the corner edge 3 to the inner peripheral side of the tool main body 11.

Additionally, the main cutting edge 4 that extends from the corner edge 3 directed to the tip outer peripheral side of the tool main body 11 to the inner peripheral side of the tool main body 11 is slightly inclined so as to face the tip side of the tool main body 11 toward the inner peripheral side. That is, the indexable cutting tool of the present embodiment is an indexable radius end mill. Moreover, in the sub-cutting edge 5 connected to the main cutting edge 4, a straight line connecting the main cutting edge first end portion 4a and the sub-cutting edge first end portion 5a to each other is disposed so as to be located on a plane perpendicular to the axis O of the tool main body 11.

In the cutting insert having the above configuration attached to the tool main body 11 of the indexable cutting tool in this way, as described above, the land portion 7 that gradually protrudes in the direction of the insert center line L from the corner edge 3 toward the inner side of the polygonal surface 2, and the rake face portion 8 that gradually recedes in the direction of the insert center line L toward the inner side of the polygonal surface 2 from the land portion 7 are formed on the polygonal surface 2.

Also, within 40° around the corner edge center line C toward the corner edge second end portion 3b from the corner edge first end portion 3a along the corner edge 3, the inclination angle Θ1 of the land portion 7 with respect to the reference plane P perpendicular to the insert center line L in the cross-section along the corner edge center line C is the inclination angle Θ2 or more of the rake face portion 8 with respect to the reference plane P perpendicular to the insert center line L.

For this reason, in the cutting insert and the indexable cutting tool configured as described above, a large cross-sectional area, along the corner edge center line C, of the section of the insert main body 1 on the polygonal surface 2 connected to the corner edge 3 can be secured particularly on the corner edge 3 side within 40° around the corner edge center line C from the corner edge first end portion 3a of the corner edge 3 used exclusively for cutting operations toward the corner edge second end portion 3b.

Therefore, since the wall thickness of the insert main body 1 on the polygonal surface 2 connected to the corner edge 3 can be increased to give high cutting edge strength, the fracture resistance of the corner edge 3 can be improved. Even in a case where a high-hardness work material is cut, a stable cutting operation can be performed for a long period of time. In particular, in the present embodiment, the inclination angle θ1 is the inclination angle Θ2 or more even within 40° around the corner edge center line C from the corner edge second end portion 3b toward the corner edge first end portion 3a along the corner edge 3, that is, the inclination angle Θ1 is the inclination angle Θ2 or more over the entire length of the corner edge 3. Thus, the fracture resistance of the corner edge 3 can be improved even in a case where the entire length of the corner edge 3 is used.

Additionally, in the present embodiment, the convexly curved apex portion 9 coming into contact with the land portion 7 and the rake face portion 8 in the cross-section along the corner edge center line C is formed between the land portion 7 and the rake face portion 8, and the rear wall surface portion 10 that gradually recedes in the direction of the insert center line L toward the inner side of the polygonal surface 2 with respect to the extension line M of the rake face portion 8 to the inner side of the polygonal surface 2 in the cross-section along the corner edge center line C, and the boss surface 2A that extends from the rear wall surface portion 10 to the inner side of the polygonal surface 2 to form the opening portion of the mounting hole 1A and is the plane P perpendicular to the insert center line L are formed closer to the inner side of the polygonal surface 2 than the rake face portion 8.

Also, within 40° around the corner edge center line C from the corner edge first end portion 3a toward the corner edge second end portion 3b along the corner edge 3, in the cross-section along the corner edge center line C, the distance H1 in the direction perpendicular to the corner edge center line C from the corner edge 3 to the apex 9a in the direction of the insert center line L of the apex portion 9 is the distance H2 or less in the direction perpendicular to the corner edge center line C to the intersection point 2a between the boss surface 2A and the extension line M of the rake face portion 8 from the apex 9a of the apex portion 9 to the inner side of the polygonal surface 2.

Therefore, according to the present embodiment, the distance H2 until the extension line M reaches the boss surface 2A along the rake face portion 8 from the apex portion 9 of the land portion 7 disposed on the inner side of the polygonal surface 2 is the distance H1 or more that is the width of the land portion 7. For this reason, a larger cross-sectional area of the section, along the corner edge center line C, of the insert main body 1 on the polygonal surface 2 connected to the corner edge 3 can be secured, and higher cutting edge strength can be given to the corner edge 3 to improve the fracture resistance more reliably. In addition, the distance H1, which is the width of the land portion 7, is constant from the corner edge second end portion 3b to the main cutting edge first end portion 4a in the present embodiment.

In the present embodiment, within 40° around the corner edge center line C from the corner edge first end portion 3a toward the corner edge second end portion 3b along the corner edge 3, in the cross-section along the corner edge center line C, the ratio H3/H2 of the distance H3 in the direction perpendicular to the corner edge center line C from the apex 9a of the apex portion 9 to the contact point 10a between the rear wall surface portion 10 and the boss surface 2A and the distance H2 in the direction perpendicular to the corner edge center line C from the apex 9a of the apex portion 9 to the intersection point 2a between the boss surface 2A and the extension line M of the rake face portion 8 to the inner side of the polygonal surface 2 is in a range of 0.45 to 0.75.

For this reason, the dischargeability of chips generated by the corner edge 3, the main cutting edge 4, and the sub-cutting edge 5 during cutting operations can be improved. In a case where the insert main body 1 has a front-back inverted symmetrical shape as in the present embodiment, it is possible to secure a large area of the boss surface 2A, which is a seating surface to be brought into close contact with the bottom surface 12a of the insert mounting seat 12 of the tool main body 11 so as to stably seat the cutting insert on the insert mounting seat 12.

Here, when the ratio H3/H2 is smaller than 0.45, the contact distance between a chip and the rake face portion 8 becomes short. Therefore, there is a concern that the control of the discharge direction of the chip becomes unstable. Additionally, when the ratio H3/H2 is larger than 0.75, on the contrary, the contact distance between the chip and the rake face portion 8 becomes long and the cutting resistance resulting from the abrasion of the chip increases, and the rear wall surface portion 10 recedes to the inner side of the polygonal surface. Thus, there is a concern that the area of the boss surface 2A of the polygonal surface 2, which is the seating surface to be brought into close contact with the bottom surface 12a of the insert mounting seat 12, becomes small as described above, and the seating stability of the cutting insert is impaired.

Furthermore, in the present embodiment, within 40° around the corner edge center line C from the corner edge second end portion 3b toward the corner edge first end portion 3a along the corner edge 3, a tangential line Q between the rear wall surface portion 10 and the boss surface 2A is formed in a concave arc shape in the plan view. Also, in the plan view, the ratio G2/G1 formed by the radius G2 of the concave arc of the tangential line Q between the rear wall surface portion 10 and the boss surface 2A with respect to the radius G1 of an arc formed by the corner edge 3 is in a range of 0.23 to 0.87 in the present embodiment.

For this reason, the seating stability of the cutting insert can be improved, and the discharge direction of chips can be easily controlled. That is, when this ratio G2/G1 is smaller than 0.23, there is a concern that the rear wall surface portion 10 recedes to the inner side of the polygonal surface 2 and the area of the boss surface 2A becomes small, and the seating stability of the cutting insert is impaired. There is also a concern that the width from the corner edge 3 to the tangential line Q between the rear wall surface portion 10 and the boss surface 2A as viewed from the direction of the corner edge center line C becomes large, and the contact distance between the chip and the land portion 7 or the rake face portion 8 increases and the cutting resistance increases.

Additionally, on the contrary, when the ratio G2/G1 is larger than 0.87, the width from the corner edge 3 to the tangential line Q between the rear wall surface portion 10 and the boss surface 2A as viewed from the direction of the corner edge center line C may become small, and the contact distance between the chip and the land portion 7 or the rake face portion 8 may become short. Therefore, there is a concern that the control of the chip discharge direction becomes unstable.

In addition, in the present embodiment, since the rear wall surface portion 10 comes in contact with the boss surface 2A, the distance H3 or the radius G2 is based on the contact points 10a or the tangential line Q between the boss surface 2A and the rear wall surface portion 10. However, in a case where the rear wall surface portion 10 intersects the boss surface 2A at an angle, the distance H3 or the radius G2 may be based on the intersection point or intersection line between the boss surface 2A and the rear wall surface portion 10.

Moreover, in the present embodiment, the polygonal surface 2 is the rectangular surface formed in a 180° rotationally symmetrical manner around the insert center line L, and the corner edges 3 are formed at corner portions where two angular portions located on one diagonal line of the rectangular surface are disposed, and the main cutting edge 4 and the sub-cutting edge 5 are formed at the short side portions of the rectangular surface connected to the corner edges 3. Thus, two corner edges 3, two main cutting edges 4, and two sub-cutting edges 5 can be used on one polygonal surface 2, which is efficient and economical.

Moreover, in the present embodiment, the insert main body 1 having such a rectangular surface-shaped polygonal surface 2 has the front-back inverted symmetrical shape. Therefore, since four sets of corner edges 3, main cutting edges 4, and the sub-cutting edge 5 can be used in one insert main body 1, this is even more efficient and economical.

Meanwhile, in the present embodiment, the parallel region A that extends along the direction parallel to the reference plane P perpendicular to the insert center line C is formed at the corner edge 3. In the parallel region A, the wall thickness of the insert main body 1 from the corner edge 3 can be increased even in the direction of the insert center line L. For this reason, since it is possible to give high cutting edge strength to the corner edge 3, for example, even in a case where a machined surface of a work material having a large number of holes is cut, the fracture resistance of the corner edge 3 can be further improved.

Additionally, the main cutting edge 4 connected to the corner edge 3 that extends along the parallel region A at the corner edge first end portion 3a, and the first sub-cutting edge 5A on the main cutting edge 4 side out of the sub-cutting edges 5 connected to the main cutting edge 4 at the main cutting edge first end portion 4a are also located on the parallel region A that extends in the direction parallel to the reference plane P perpendicular to the insert center line L through the corner edge first end portion 3a. For this reason, even in the main cutting edge 4 and the first sub-cutting edge 5A of the sub-cutting edge 5, it is possible to secure the wall thickness in the direction of the insert center line L to improve the cutting edge strength, and high fracture resistance can be obtained in the cutting operation of a work material or the like having a large number of holes.

Moreover, in the sub-cutting edge 5, the portion of the second sub-cutting edge 5B, which is connected to the first sub-cutting edge 5A in the sub-cutting edge first end portion 5a, on the sub-cutting edge first end portion 5a side is located on the parallel region A that extends in the direction parallel to the reference plane P perpendicular to the insert center line L through the corner edge first end portion 3a. Thus, it is possible to improve the fracture resistance even in a case where the feed amount per edge is large. In addition, even if the parallel region A is not located exactly parallel to the reference plane P perpendicular to the insert center line L, the parallel region A may have an angle error within 0.5° with respect to the reference plane P, for example, within the range of manufacturing error.

The second sub-cutting edge 5B of the sub-cutting edge 5 connected to the first sub-cutting edge 5A includes the inclined region B that gradually recedes in the direction of the insert center line L toward the sub-cutting edge second end portion 5b opposite to the sub-cutting edge first end portion 5a in the present embodiment. Here, the second sub-cutting edge 5B is slightly inclined so as to face the posterior end side toward the inner peripheral side of the tool main body 11 in a state in which the insert main body 1 is attached to the insert mounting seat 12 and is used exclusively when inclination cutting operations in which the tool main body 11 is fed obliquely with respect to the axis O are performed. Therefore, according to the present embodiment, even in the case of such inclination cutting operations, the fracture resistance of the second sub-cutting edge 5B can be improved.

Moreover, as viewed from the direction facing the flank face 6 of the sub-cutting edge 5, the width W1, in the direction perpendicular to the insert center line L, of the inclined region B in the second sub-cutting edge 5B is made larger than the width W2, in the direction perpendicular to the insert center line L, of the parallel region A in the second sub-cutting edge 5B. For this reason, even in a case where the cutting amount is large in the inclination cutting operation as described above, the fracture resistance of the second sub-cutting edge 5B can be more reliably secured.

Additionally, in the cross-section along the corner edge center line C of the present embodiment, the inclination angle Θ1 of the land portion 7 connected to the corner edge 3 is within a range of 15° to 25°, and the same applies to the corner edge first end portion 3a that is the boundary between the corner edge 3 and the main cutting edge 4. For this reason, in the corner edge first end portion 3a that is the boundary between the corner edge 3 and the main cutting edge 4, the fracture resistance can be maintained while reducing the cutting resistance.

That is, when the inclination angle Θ1 of the land portion 7 at the corner edge first end portion 3a is less than 15°, there is a concern that the tool angle becomes small and it is difficult to secure the fracture resistance in the cutting operation of a high-hardness work material. On the other hand, when the inclination angle θ1 of the land portion 7 at the corner edge first end portion 3a exceeds 25°, there is a concern that the land portion 7 rises excessively and increases the cutting resistance.

Moreover, in the present embodiment, the distance H1 at the corner edge first end portion 3a, which is the boundary between the corner edge 3 and the main cutting edge 4, is within a range of 0.35 mm to 0.45 mm. This can also maintain the fracture resistance while reducing the cutting resistance at the corner edge first end portion 3a that is the boundary between the corner edge 3 and the main cutting edge 4.

That is, when the distance H1 of the land portion 7 at the corner edge first end portion 3a is less than 0.35 mm, there is a concern that the land portion 7 becomes narrow and it is difficult to secure the fracture resistance in the cutting operation of a high-hardness work material. On the other hand, when the distance H1 of the land portion 7 at the corner edge first end portion 3a exceeds 0.45 mm, there is a concern that the land portion 7 becomes long and increases the cutting resistance resulting from the contact of chips.

Furthermore, in the present embodiment, the inclination angle θ1 of the land portion 7 in the cross-section orthogonal to the sub-cutting edge 5 at the sub-cutting edge first end portion 5a, which is the boundary between the first sub-cutting edge 5A and the second sub-cutting edge 5B of the sub-cutting edge 5, is within a range of 15° to 35°. For this reason, it is possible to improve the fracture resistance of the corner edge first end portion 3a and promote the reduction of the cutting resistance.

That is, when the inclination angle θ1 of the land portion 7 at the sub-cutting edge first end portion 5a is less than 15°, the tool angle of the sub-cutting edge 5 may become small and chipping is likely to occur in the cutting operation of a high-hardness work material. On the other hand, when the inclination angle θ1 of the land portion 7 at the sub-cutting edge first end portion 5a exceeds 35°, there is a concern that the land portion 7 of the sub-cutting edge 5 rises excessively and increases the cutting resistance.

Similarly, the distance of the land portion 7 in the direction perpendicular to the insert center line L in the cross-section orthogonal to the sub-cutting edge 5 at the sub-cutting edge first end portion 5a is within a range of 0.15 mm to 0.45 mm. This can also improve the fracture resistance of the corner edge first end portion 3a and promote the reduction of the cutting resistance.

That is, when the distance of the land portion 7 in the direction perpendicular to the insert center line L at the sub-cutting edge first end portion 5a is less than 0.15 mm, the land portion 7 becomes short and chipping may be likely to occur in the cutting operation of a high-hardness work material. On the other hand, when the distance of the land portion 7 in the direction perpendicular to the insert center line L at the sub-cutting edge first end portion 5a exceeds 0.45 mm, there is a concern that the land portion 7 of the sub-cutting edge 5 also becomes long excessively and the cutting resistance resulting from the contact of chips is increased.

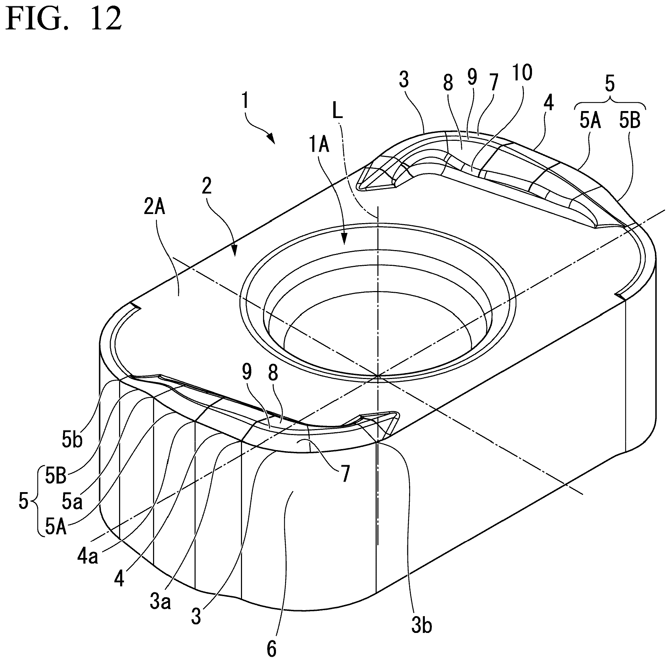

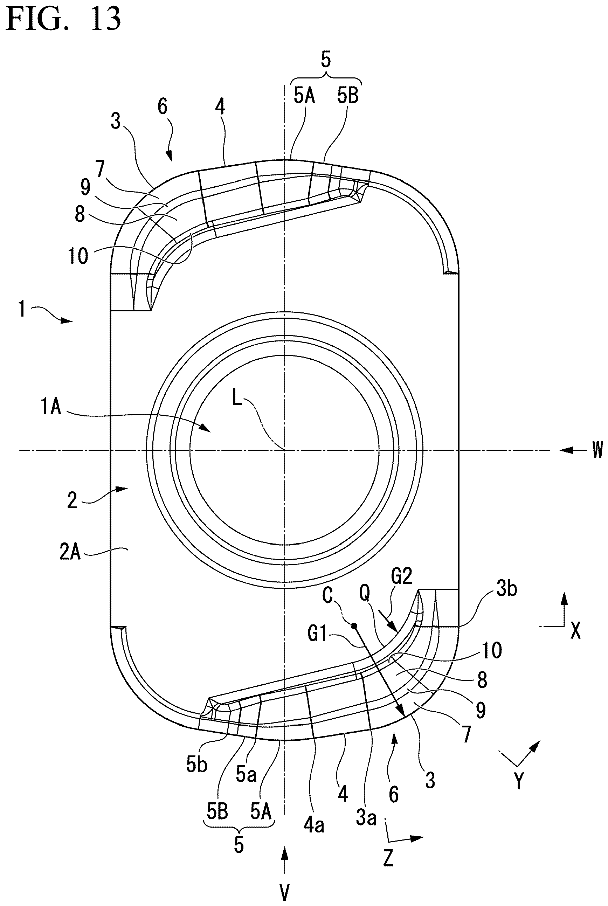

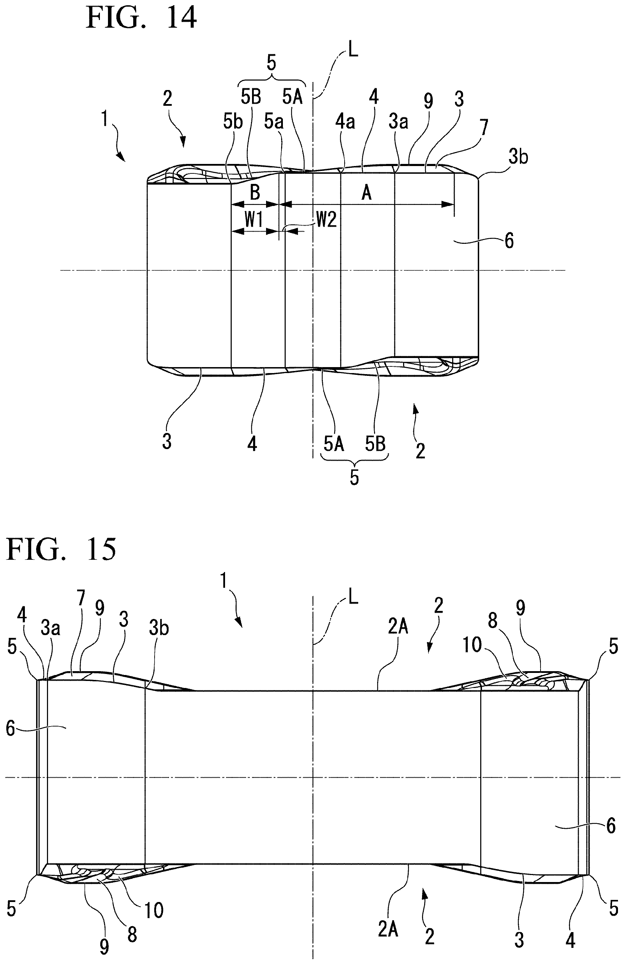

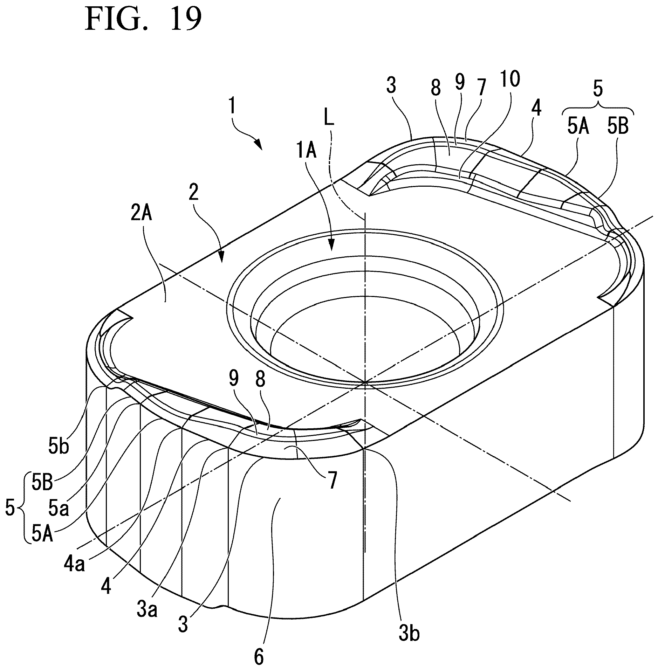

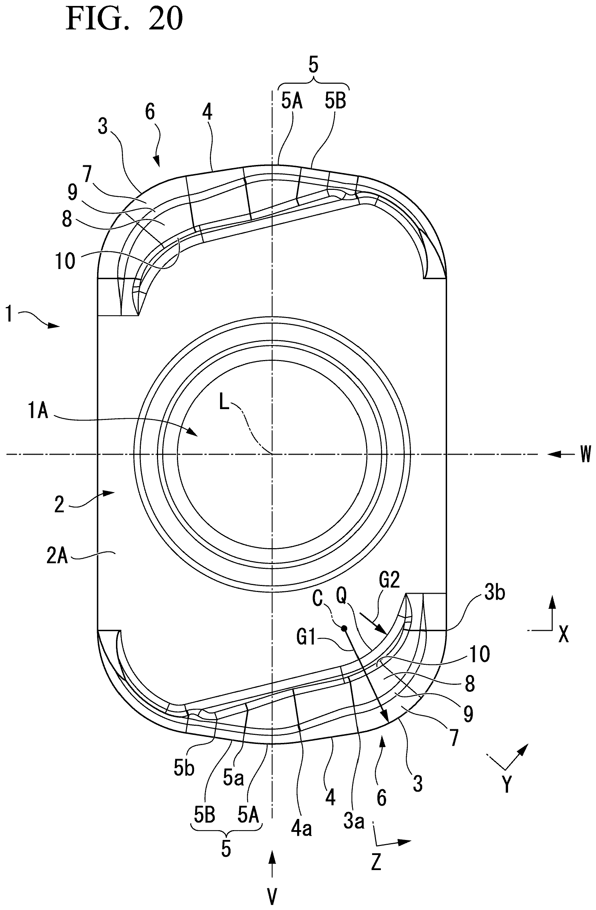

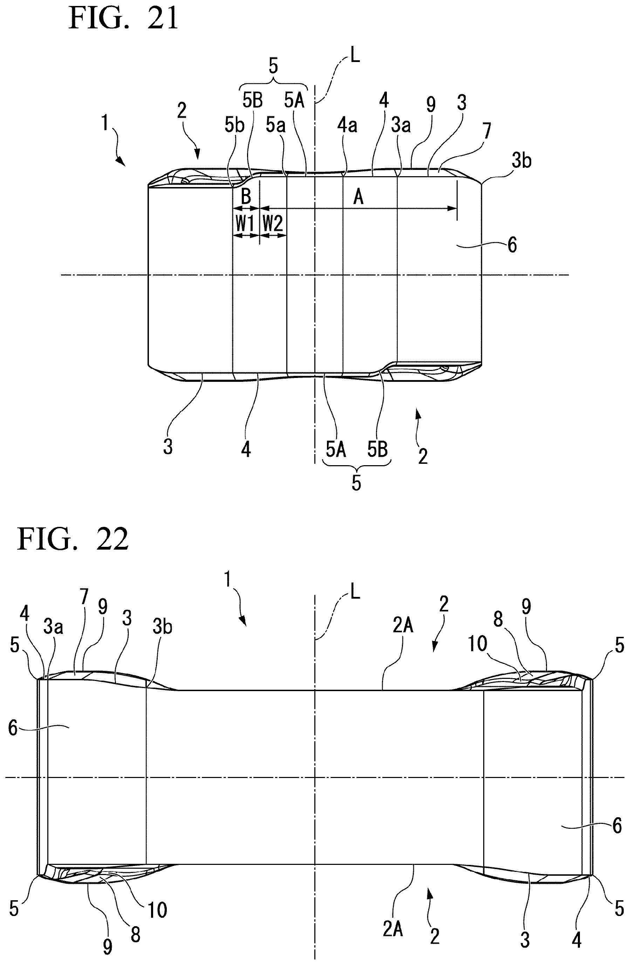

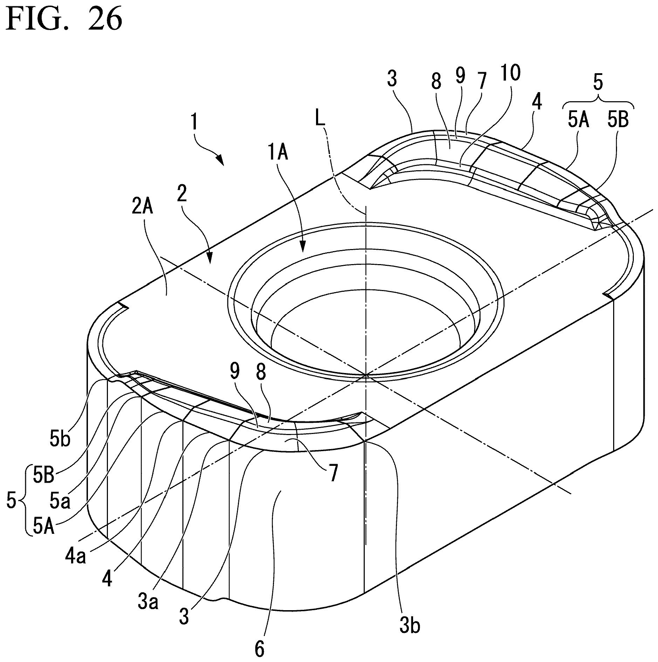

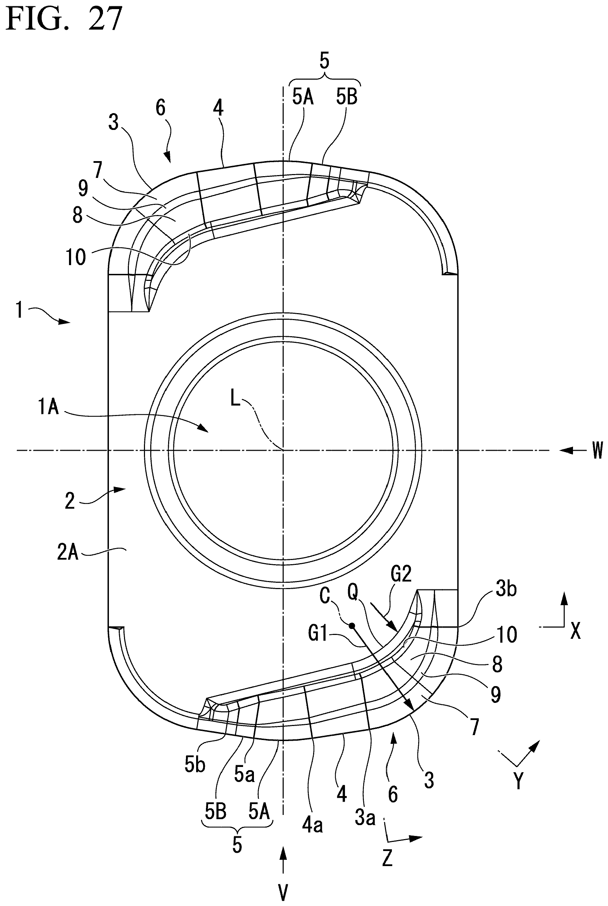

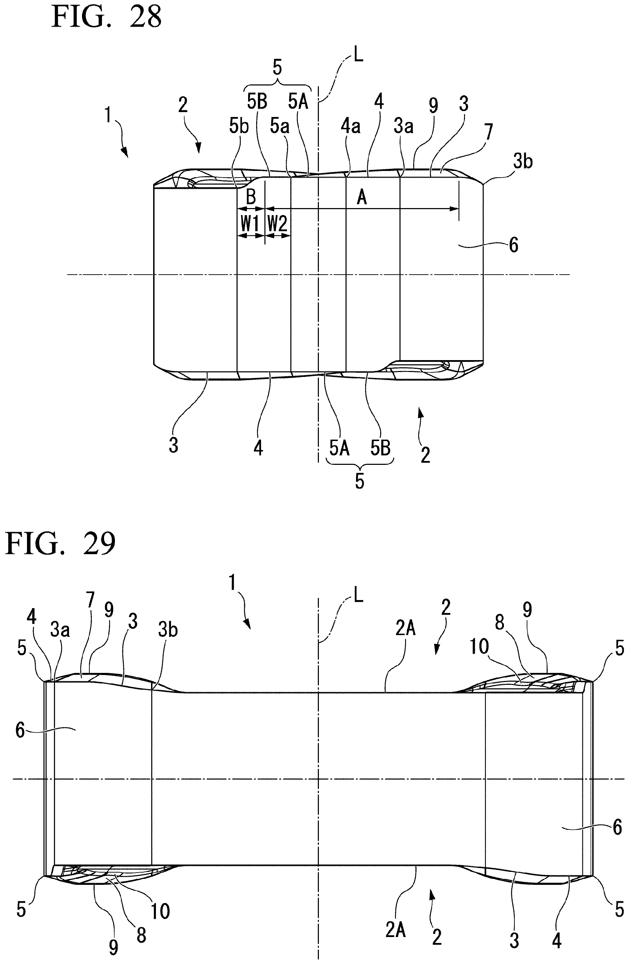

Next, Figs. 12 to 18 show a second embodiment of the cutting insert of the present invention, and Figs. 19 to 25 show a third embodiment of the cutting insert of the present invention, and Figs. 26 to 32 show a fourth embodiment of the cutting insert of the present invention. In the cutting inserts of the second to fourth embodiments, the same reference numerals will be given to the portions common to the cutting inserts of the first embodiment of the present invention shown in Figs. 1 to 7, and the description thereof will be omitted.

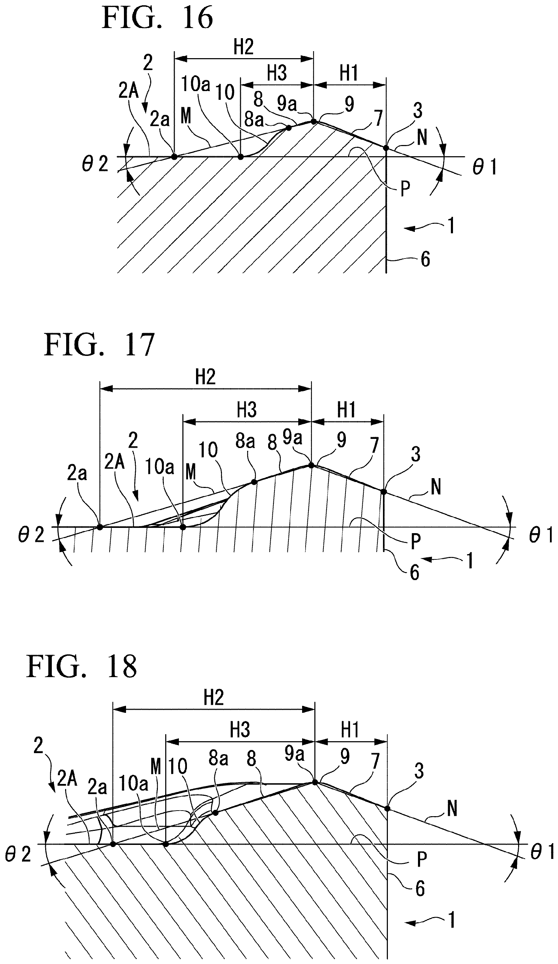

In the cutting insert of the second embodiment shown in Figs. 12 to 18 and in the cross-section along the corner edge center line C, the inclination angle Θ2 of the rake face portion 8 at the corner edge first end portion 3a shown in Fig. 18 is 17.0° and the distance H3 is 0.9 mm, the inclination angle Θ2 of the rake face portion 8 at the position of 40° around the corner edge center line C from the corner edge first end portion 3a toward the corner edge second end portion 3b shown in Fig. 17 is 16.3°, and the inclination angle Θ2 of the rake face portion 8 at the corner edge second end portion 3b of the corner edge 3 shown in Fig. 16 is 14.2°, and the distance H2 is 0.8 mm. The specifications other than these are the same as those in the first embodiment.

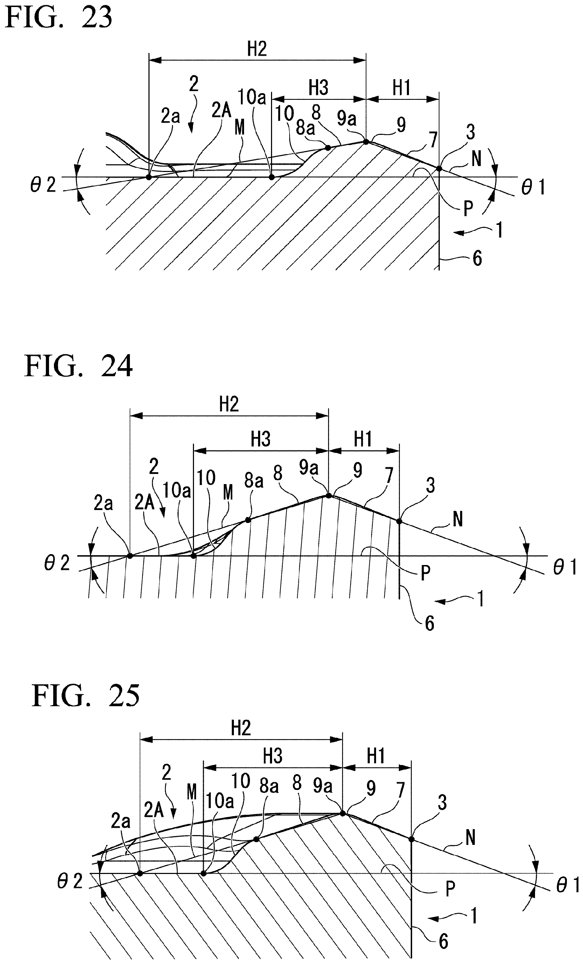

Additionally, in the cutting insert of the third embodiment shown in Figs. 19 to 25 and in the cross-section along the corner edge center line C, the inclination angle θ1 of the land portion 7 at the corner edge first end portion 3a shown in Fig. 25 is 20°, the inclination angle Θ2 of the rake face portion 8 is 17°, and the distance H2 is 1.1 mm, the inclination angle Θ2 of the rake face portion 8 at the position of 40° around the corner edge center line C from the corner edge first end portion 3a toward the corner edge second end portion 3b shown in Fig. 24 is 16.9°, the distance H2 is 1.1 mm, and the distance H3 is 0.8 mm, and the inclination angle Θ1 of the land portion 7 at the corner edge second end portion 3b of the corner edge 3 shown in Fig. 23 is 20°, the inclination angle Θ2 of the rake face portion 8 is 9.3°, the distance H2 is 1.3 mm, and the distance H3 is 0.5 mm. The specifications other than these are the same as those in the first embodiment.

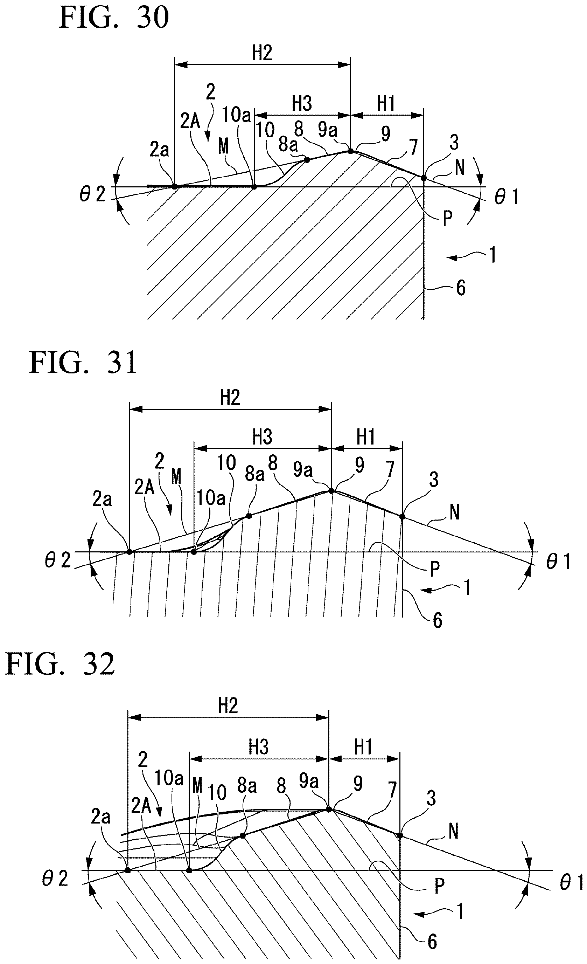

Moreover, in the cutting insert of the fourth embodiment shown in Figs. 26 to 32, the inclination angle Θ2 of the rake face portion 8 at the corner edge first end portion 3a shown in Fig. 32 is 16.9°, and the distance H2 is 1.1 mm, the inclination angle Θ2 of the rake face portion 8 at the position of 40° around the corner edge center line C from the corner edge first end portion 3a toward the corner edge second end portion 3b shown in Fig. 31 is 16.9°, and the distance H2 is 1.1 mm, the distance H3 is 0.8 mm, and the inclination angle θ1 of the land portion 7 at the corner edge second end portion 3b of the corner edge 3 shown in Fig. 30 is 20°, the inclination angle Θ2 of the rake face portion 8 is 11.5°, the distance H2 is 1.0 mm, and the distance H3 is 0.5 mm. Specifications other than these are the same as those in the first embodiment.

Even in such cutting inserts of the second to fourth embodiments, the inclination angle θ1 of the land portion 7 is the inclination angle Θ2 or more of the rake face portion 8. Thus, the same effects as those of the first embodiment can be obtained. However, in the third and fourth embodiments among these, the width W1, in the direction perpendicular to the insert center line L, of the inclined region B in the second sub-cutting edge 5B as viewed from the direction facing the flank face 6 of the sub-cutting edge 5 is not made larger than but approximately equal to the width W2, in the direction perpendicular to the insert center line L, of the parallel region A in the second sub-cutting edge 5B, or the width W1, in the direction perpendicular to the insert center line L, of the inclined region B in the second sub-cutting edge 5B is made smaller than the width W2, in the direction perpendicular to the insert center line L, of the parallel region A in the second sub-cutting edge 5B.

### INDUSTRIAL APPLICABILITY

Even in a case where a high-hardness work material is cut using the indexable cutting tool, a stable cutting operation can be performed for a long period of time.

### REFERENCE SIGNS LIST

1: Insert main body
1A: Mounting hole
2: Polygonal surface
2A: Boss surface
2a: Intersection point between boss surface 2A and extension line M of rake face portion 8 to inner side of polygonal surface 2 from apex portion 9a of apex portion 9 in cross-section along corner edge center line C
3: Corner edge
3a: Corner edge first end portion
3b: Corner edge second end portion
4: Main cutting edge
4a: Main cutting edge first end portion
5: Sub-cutting edge
5A: First sub-cutting edge
5B: Second sub-cutting edge
5a: Sub-cutting edge first end portion
5b: Sub-cutting edge second end portion
6: Flank face
7: Land portion
8: Rake face portion
8a: Contact point of rake face portion 8 with rear wall surface portion 10
9: Apex portion
9a: Apex of apex portion 9
10: Rear wall surface portion
10a: Contact point between boss surface 2A and rear wall surface portion 10 in cross-section along corner edge center line C
11: Tool main body
12: Insert mounting seat
13: Chip pocket
14: Clamp screw
L: Insert center line
C: Corner edge center line
M: Extension line of rake face portion 8 to inner side of polygonal surface 2 from apex portion 9a of apex 9 in cross-section along corner edge center line C
N: Straight line connecting corner edge 3 and apex portion 9a of apex 9 in cross-section along corner edge center line C
P: Reference plane
Q: Tangential line between boss surface 2A and rear wall surface portion 10
θ1: Inclination angle of land portion 7
Θ2: Inclination angle of rake face portion 8
H1: Distance in direction perpendicular to corner edge center line C from corner edge 3 to apex portion 9a of apex 9 in a cross-section along corner edge center line C
H2: Distance in direction perpendicular to corner edge center line C from apex portion 9a of apex 9 to intersection point 2a in cross-section along corner edge center line C
H3: Distance in direction perpendicular to corner edge center line C from apex portion 9a of apex 9 to contact point 10a in cross-section along corner edge center line C.
A: Parallel region
B: Inclined region
G1: Radius of arc formed by corner edge 3
G2: Radius of arc formed by tangential line Q
W1: Width in direction perpendicular to insert center line L of inclined region B in second sub-cutting edge 5B
W2: Width in direction perpendicular to insert center line L of parallel region A in second sub-cutting edge 5B
O: Axis of tool main body 11
T: Tool rotation direction

## Claims

1. A cutting insert in which a mounting hole that penetrates an insert main body around an insert center line is open to front and back polygonal surfaces of the insert main body formed in a polygonal plate shape, and
in a ridge portion of the polygonal surface in a plan view as viewed from an insert center line direction, a corner edge having a convex arc shape centered on a corner edge center line parallel to the insert center line is formed at a corner portion of the polygonal surface, a main cutting edge that extends linearly in a tangential direction of the corner edge is formed from a corner edge first end portion of the corner edge, and a sub-cutting edge that recedes with respect to an extension line of the main cutting edge to a main cutting edge first end portion side is formed from the main cutting edge first end portion of the main cutting edge opposite to the corner edge first end portion,
wherein a land portion that gradually protrudes in the insert center line direction from the corner edge toward an inner side of the polygonal surface is formed on the polygonal surface, and a rake face portion that gradually recedes in the insert center line direction toward the inner side of the polygonal surface is formed closer to the inner side of the polygonal surface than the land portion, and
within 40° around the corner edge center line from the corner edge first end portion toward a corner edge second end portion opposite to the corner edge first end portion along the corner edge, an inclination angle θ1 of the land portion with respect to a reference plane perpendicular to the insert center line is an inclination angle Θ2 or more of the rake face portion with respect to the reference plane perpendicular to the insert center line, in a cross-section along the corner edge center line.

2. The cutting insert according to Claim 1,
wherein a convexly curved apex portion coming in contact with the land portion and the rake face portion is formed between the land portion and the rake face portion, in the cross-section along the corner edge center line,
a rear wall surface portion that gradually recedes in the insert center line direction toward the inner side of the polygonal surface with respect to an extension line of the rake face portion to the inner side of the polygonal surface, and a boss surface that is a plane perpendicular to the insert center line and extending from the rear wall surface portion to the inner side of the polygonal surface to form an opening portion of the mounting hole are formed closer to the inner side of the polygonal surface than the rake face portion, in the cross-section along the corner edge center line, and
within 40° around the corner edge center line from the corner edge first end portion toward the corner edge second end portion along the corner edge, a distance H1 in a direction perpendicular to the corner edge center line from the corner edge to an apex of the apex portion in the insert center line direction is a distance H2 or less in the direction perpendicular to the corner edge center line from the apex of the apex portion to an intersection point between the boss surface and the extension line of the rake face portion to the inner side of the polygonal surface, in the cross-section along the corner edge center line.

3. The cutting insert according to Claim 2,
wherein within 40° around the corner edge center line from the corner edge first end portion toward the corner edge second end portion along the corner edge, a ratio H3/H2 of a distance H3 in a direction perpendicular to the corner edge center line from the apex of the apex portion to a contact point or an intersection point between the rear wall surface portion and the boss surface and a distance H2 in the direction perpendicular to the corner edge center line from the apex of the apex portion to the intersection point between the boss surface and the extension line of the rake face portion to the inner side of the polygonal surface is within a range of 0.45 to 0.70, in the cross-section along the corner edge center line.

4. The cutting insert according to any one of Claims 1 to 3,
wherein a rear wall surface portion that gradually recedes in the insert center line direction toward the inner side of the polygonal surface with respect to an extension line of the rake face portion to the inner side of the polygonal surface, and a boss surface that is a plane perpendicular to the insert center line and extending from the rear wall surface portion to the inner side of the polygonal surface to form an opening portion of the mounting hole are formed closer to the inner side of the polygonal surface than the rake face portion, in the cross-section along the corner edge center line,
a tangential line or an intersection line between the rear wall surface portion and the boss surface is formed in an arc shape in the plan view within 40° around the corner edge center line from the corner edge second end portion toward the corner edge first end portion along the corner edge, and
in the plan view, a ratio G2/G1 formed by a radius G2 of an arc formed by the tangential line or the intersection line between the rear wall surface portion and the boss surface with respect to a radius G1 of an arc formed by the corner edge is within a range of 0.23 to 0.87.

5. The cutting insert according to any one of Claims 1 to 4,
wherein a region that extends in a direction parallel to the reference plane perpendicular to the insert center line is formed at the corner edge.

6. The cutting insert according to any one of Claims 1 to 5,
wherein the polygonal surface is a rectangular surface formed in a 180° rotationally symmetrical manner around the insert center line, the corner edge is formed at the corner portion where two angular portions located on one diagonal line of the rectangular surface are disposed, and the main cutting edge and the sub-cutting edge are formed on a short side portion of the rectangular surface connected to the corner edge.

7. The cutting insert according to Claim 6,
wherein the insert main body has a front-back inverted symmetrical shape.

8. An indexable cutting tool,
wherein the cutting insert according to any one of Claims 1 to 7 is detachably attached to an insert mounting seat formed at a tip end portion outer periphery of a tool main body rotating in a tool rotation direction around an axis by screwing a clamp screw inserted through the mounting hole into a bottom surface of the insert mounting seat facing the tool rotation direction such that one polygonal surface is directed in the tool rotation direction, the corner edge formed in the corner portion of the one polygonal surface is directed toward a tip outer peripheral side of the tool main body, and the main cutting edge extending from the corner edge first end portion of the corner edge is directed toward an inner peripheral side of the tool main body.

9. A tool main body for an indexable cutting tool,
wherein the cutting insert according to any one of Claims 1 to 7 is configured to be detachably attachable to an insert mounting seat formed at a tip end portion outer periphery of a tool main body rotating in a tool rotation direction around an axis by screwing a clamp screw inserted through the mounting hole into a bottom surface of the insert mounting seat facing the tool rotation direction such that one polygonal surface is directed in the tool rotation direction, the corner edge formed in the corner portion of the one polygonal surface is directed toward a tip outer peripheral side of the tool main body, and the main cutting edge extending from the corner edge first end portion of the corner edge is directed toward an inner peripheral side of the tool main body.
